# EUROPÄISCHE PATENTSCHRIFT

(11) **EP 0 976 082 B1**
(45) Veröffentlichungstag und Bekanntmachung des Hinweises auf die Patenterteilung: **27.02.2002**
(21) Anmeldenummer: 98922673.3
(22) Anmeldetag: 09.04.1998
(51) Int. Cl.: G06K 7/00

(54) **SCHNITTSTELLEN-VORRICHTUNG FÜR CHIPKARTEN**
INTERFACE DEVICE FOR CHIP CARDS
DISPOSITIF D'INTERFACE POUR CARTES A PUCE

(30) Priorität: 18.04.1997 DE 19716423; 21.04.1997 DE 19716694
(43) Veröffentlichungstag der Anmeldung: 02.02.2000
(73) Patentinhaber: SCM Microsystems GmbH, 85276 Pfaffenhofen (DE)
(72) Erfinder: SCHNEIDER, Robert, D-82152 Martinsried (DE)
(74) Vertreter: Degwert, Hartmut, Dipl.-Phys.
(86) Internationale Anmeldenummer: EP9802068
(87) Internationale Veröffentlichungsnummer: WO9848368

(56) Entgegenhaltungen:
- EP-A- 0 532 166
- EP-A- 0 696 010
- EP-A- 0 704 813
- PATENT ABSTRACTS OF JAPAN vol. 015, no. 364 (P-1252), 13. September 1991 & JP 03 141486 A (HITACHI LTD;OTHERS: 01), 17. Juni 1991

## Beschreibung

Die Erfindung betrifft eine Schnittstellen-Vorrichtung für Chipkarten im genormten Kreditkarten-Format.

Aus der DE 43 10 517 C2 ist . bereits eine Schnittstellen-Vorrichtung für Chipkarten bekannt, die ein flaches Gehäuse im genormten PCMCIA-Format aufweist. Dieses Gehäuse wird in einen entsprechenden Aufnahmeschacht eines Computers eingeschoben und weist an seinem vorderen Ende einen Stecksockel auf, der einer Steckerleiste am Boden des Aufnahmeschachtes im Computer entspricht. Von seinem hinteren Ende geht ein Aufnahmekanal für eine Chipkarte aus.

Die Breite eines üblichen Gehäuses für PCMCIA-Geräte beträgt 54 mm und stimmt genau mit der genormten Breite einer Chipkarte im Kreditkarten-Format überein. Der Aufnahmekanal für die Chipkarte erstreckt sich somit über die gesamte Breite des Gehäuses der Schnittstellen-Vorrichtung, so daß dieses Gehäuse an den beiden Schmalseiten offen ist. Um dennoch eine seitliche Führung für die Chipkarte zu gewährleisten, ist das Gehäuse an seinem hinteren Ende mit einem verbreiterten Kragen versehen, der aus dem Aufnahmeschacht des Computers heraussteht und den Einführungsschlitz für die Chipkarte auch seitlich berandet. Dieser Kragen wird für die seitliche Führung der Chipkarte als unabdingbar angesehen, weil die Breite der Chipkarte mit der des Gehäuses einer PCMCIA-Vorrichtung übereinstimmt.

In der EP 0 704 813 A2 ist eine gleichartige Schnittstellen-Vorrichtung für Chipkarten gezeigt, die insbesondere bei tragbaren Computern eingesetzt wird. Sie hat einen seitlich berandeten Einführungsschlitz, der in den Aufnahmeschacht einiger Computer einführbar ist (siche Präamkil des Anspruchs 1).

Durch die Erfindung wird nun eine Schnittstellen-Vorrichtung für Chipkarten geschaffen, die eine seitliche Führung für die Chipkarte auch ohne aus dem Aufnahmeschacht herausragenden Kragen ermöglicht. Bei der erfindungsgemäßen Schnittstellen-Vorrichtung stimmt die Breite des Gehäuses an seinem an den Stecksockel angrenzenden Randbereich mit der des genormten Chipkarten-Formats überein. Der Aufnahmekanal für die Chipkarte endet bereits vor dem an den Stecksockel angrenzenden Randbereich des Gehäuses. Zumindest an seinem hinteren Ende ist das Gehäuse seitlich geschlossen und weist dort eine Breite auf, die bis zu 0,5 mm größer als die des Chipkarten-Formats ist. Der in den Aufnahmeschacht eingeschobene Teil des Gehäuses der Schnittstellen-Vorrichtung umfaßt auch wenigstens den größten Teil des seitlich geschlossenen hinteren Endes. Die Weite des Aufnahmekanals am hinteren Ende des Gehäuses stimmt etwa mit der Breite des Chipkarten-Formats überein. Die Erfindung beruht auf der Erkenntnis, daß die normgemäße Breite des PCMCIA-Gehäuses nur in der Nähe des Stecksockels gegeben sein muß, während der Aufnahmeschacht im Bereich seiner Einschuböffnung eine vergrößerte Weite aufweist, um einerseits die. Einführung des PCMCIA-Gehäuses zu erleichtern, und andererseits die Anbringung von Federkontakten zu ermöglichen, die an den Schmalseiten des Aufnahmeschachtes angebracht sind und mit dem metallischen Gehäuse des PCMCIA-Geräts kontaktierend in Berührung gelangen sollen, um eine Masseverbindung vom Computer zum Gehäuse herzustellen. Zwar ist die Weite des Aufnahmeschachtes in diesem Bereich nur wenig größer als die Breite des genormten Kreditkarten-Formats, jedoch reicht diese Differenz aus, um dünne Seilenwände des Gehäuses aufzunehmen, die eine einwandfreie seitliche Führung einer Chipkarte bewerkstelligen können. die Seitenwände des Gehäuses können in diesem Bereich eine Stärke von bis zu 0,25 mm aufweisen. Sie ist damit nicht geringer als bei üblichen Gehäusekonstruktionen von PCMCIA-Geräten, so daß die Seitenwandungen einteilig mit den Hauptflächen ausgebildet werden können. Es ist somit nicht erforderlich, an den Schmalseiten des Gehäuses eine Befestigung gesonderter seitlicher Wandungsteile vorzunehmen, so daß ein zusätzlicher Materialauftrag vermieden wird, durch den die Wandstärke lokal vergrößert werden könnte.

Es wäre erwünscht, den Aufnahmekanal für die Chipkarte seitlich über seine gesamte Länge zu verschließen, um zum einen das Eindringen von Fremdkörpern zu verhindern und zum anderen Kanten oder Stufen an den Seitenflächen zu vermeiden, die sich mit den Federkontakten verhaken könnten. Es ist jedoch nicht möglich, die erfindungsgemäß am hinteren Ende des Gehäuses vorgesehenen Seitenwandungen bis in den Bereich des Stecksockels heranzuführen, weil dort keine ausreichende Breite im Aufnahmeschacht vorhanden ist.

Die erfindungsgemäße Maßnahme, wonach der Aufnahmekanal bereits vor dem an den Stecksockel angrenzenden Randbereich des Gehäuses endet, eröffnet jedoch die Möglichkeit, den seitlichen Zwischenbereich des Gehäuses mit dünnen Randstreifen zu verschließen. Deren Wandstärke kann etwa die Hälfte der Wandstärke an den Seitenwandungen im Bereich des hinteren Endes des Gehäuses betragen, also etwa 0,1 bis 0,15 mm. Da die Randstreifen aufgrund der verminderten Tiefe des Aufnahmeschachtes nicht bis an den Stecksockel herangeführt werden müssen, hat der Aufnahmekanal im Bereich ihres vorderen Endes eine ausreichende Breite zu ihrer Aufnahme.

Die Befestigung der Seitenwände bzw. der seitlichen Randstreifen des Gehäuses erfolgt vorzugsweise nicht an den Schmalseiten, sondern an den Hauptflächen des Gehäuses, insbesondere an den seitlichen Längsrändern der Hauptflächen des Gehäuses, die durch eine Stufe vom mittleren Bereich der Hauptflächen abgesetzt sind und so ausreichend Raum für die Unterbringung einer doppelten Materialstärke aufweisen.

Ein besonderer Vorteil der erfindungsgemäßen Ausbildung der Schnittstellen-Vorrichtung besteht darin, daß im Gegensatz zu einer Gehäuseausführung mit offenen Seiten eine einwandfreie Kontaktierung an den Seitenwänden mittels der im Aufnahmeschacht vorgesehen Federkontakte gewährleistet ist. Die Seitenwände können so auch die seitliche Führung des Gehäuses im Aufnahmeschacht bewirken.

Um die seitliche Führung der Chipkarte im Aufnahmekanal an ihrem vorderen Ende zu perfektionieren, so daß ihre Kontaktflächen genau nach den Kontakten der Schnittstellen-Vorrichtung ausgerichtet werden, weist der Aufnahmekanal bei der bevorzugten Ausführungsform an seinem vorderen, an den Randbereich des Gehäuses angrenzenden Ende gerundete Führungsflächen auf, die der Verrundung an den Ecken des Kreditkarten-Formats entsprechen, oder rechtwinklige Führungsflächen, die eine analoge Führungsfunktion aufweisen.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
Figur 1 eine schematische Perspektivansicht der erfindungsgemäßen Schnittstellen-Vorrichtung;
Figur 2 einen schematischen Längsschnitt der Vorrichtung in einem Aufnahmeschacht eines Computers;
Figuren 3a und 3b Querschnitte von zwei Ausführungsformen der Vorrichtung im Bereich des hinteren Endes;
Figur 4 einen Querschnitt der Vorrichtung im mittleren Bereich; und
Figur 5 eine Ausführungsvariante der Vorrichtung.

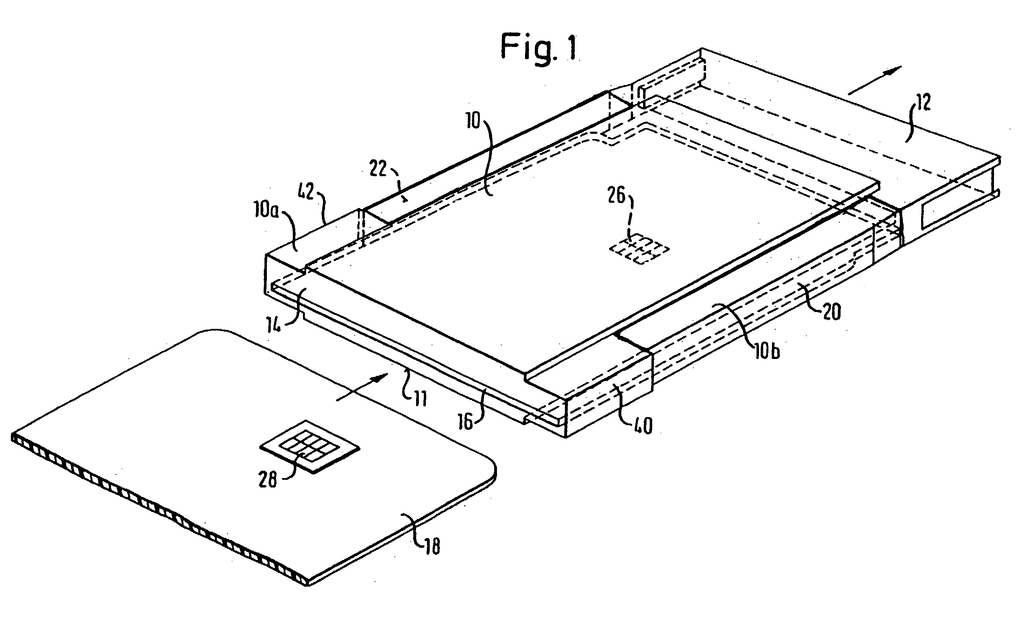

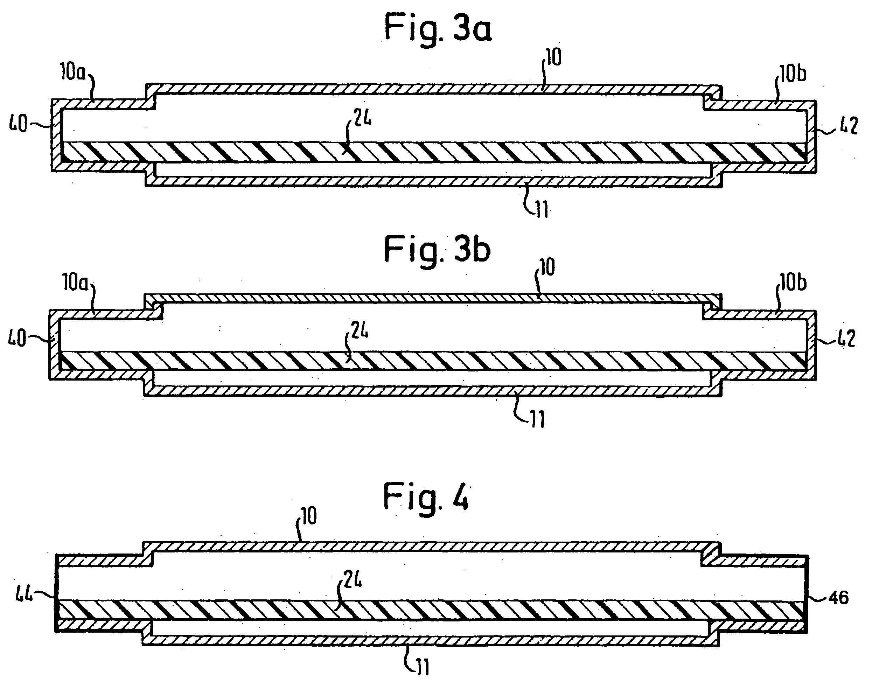

Die in Figur 1 gezeigte Schnittstellen-Vorrichtung weist ein flaches Gehäuse im allgemein bekannten, genormten PCMCIA-Format auf. Dieses Gehäuse hat eine obere Hauptfläche 10 mit zwei durch je eine Stufe abgesetzten Längsrändern 10a, 10b, einem Stecksockel 12 an seinem vorderen Ende, einer hinteren Schmalseite 14 mit einem Einführschlitz 16 für eine Chipkarte 18, zwei seitliche Schmalseiten 20, 22 und einer unteren Hauptfläche 11, die symmetrisch zur oberen. Hauptfläche 10 ist. Im Inneren des Gehäuses ist eine gedruckte Schaltungskarte 24 angeordnet (Figuren 3 und 4), die verschiedene Komponenten der Schnittstellen-Vorrichtung aufnimmt, insbesondere zahlreiche Elektronikbauteile sowie eine Kontaktgruppe 26 zur Kontaktierung des Kontaktfeldes 28 der Chipkarte 18.

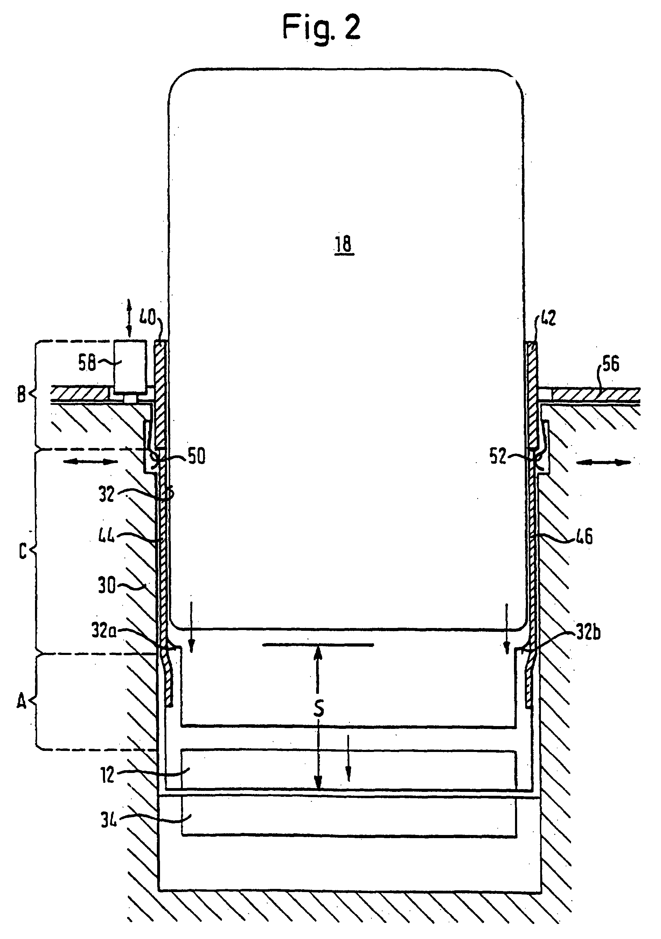

Figur 2 zeigt einen Aufnahmeschacht 30 eines Computers oder eines Moduls für einen solchen mit einer nahezu vollständig in diesen. Aufnahmeschacht eingeschobenen Schnittstellen-Vorrichtung, nach Figur 1, in deren von dem Einrührschlitz 16 ausgehenden Aufnahmekanal 32 eine Chipkarte 18 eingeschoben ist. Der Stecksockel 12 ist passend zu einer Steckerleiste 34 am Boden des Aufnahmeschachtes 30 ausgebildet.

Der Aufnahmekanal 32 hat ungefähr die Breite der Chipkarte 18 und erstreckt sich bis zu einem Randbereich A des Gehäuses, der an den Stecksockel 12 angrenzt. An diesem Randbereich A endet der Aufnahmekanal 32 mit zwei gerundeten Führungsflächen 32a, 32b, die der Verrundung an den Ecken des Kreditkarten-Formats entsprechen. Die Führungsflächen 32a, 32b können alternativ rechtwinklig ausgebildet sein. Der Aufnahmekanal 32 endet in einem Abstand S vom vorderen Ende des Gehäuses bzw. Stecksockels 12. Dieser Abstand beträgt mindestens etwa 20 mm, vorzugsweise 25 mm oder mehr.

Am hinteren Ende der Vorrichtung, das den Einführschlitz 16 für die Chipkarte 18 aufweist, ist das Gehäuse durch Seitenwände 40, 42 geschlossen, die gemäß der Darstellung in den Figuren 3a und 3b einteilig mit dem eine der Hauptflächen des Gehäuses (Figur 3b) oder beide Hauptflächen des Gehäuses (Figur 3a) bildenden Gehäuseteil ausgebildet sein können. Diese Seitenwände 40, 42 erstrecken sich aber nur bis über den in Figur 2 mit B bezeichneten hinteren Endbereich des Gehäuses. Sie bewirken eine seitliche Führung der Chipkarte 18, die durch die Führungsflächen 32a, 32b komplettiert wird, sobald. die Chipkarte 18 vollständig eingeschoben ist.

Der Zwischenbereich C des Gehäuses zwichen dem vorderen Randbereich A und dem hinteren Endbereich B ist seitlich durch schmale, dünnwandige Randstreifen 44, 46 verschlossen. Diese Randstreifen 44, 46 sind im Querschnitt U-förmig mit zwei außen auf den Längsrändern 10a, 10b des Gehäuses aufliegenden Schenkeln und einem diese verbindenden Steg, -der die Seitenwandung des Gehäuses in dessen Zwischenbereich C bildet. Der Aufnahmekanal 32 ist somit über seine gesamte Länge seitlich geschlossen. Die dem Stecksockel benachbarten Enden der Randstreifen 44, 46 sind in die Schmalseiten des Randbereichs A eingelassen, um die Bildung von Kanten oder Stufen zu vermeiden.

Der Aufnahmeschacht 30 weist an den Schmalseiten seines äußeren Endes je einen Federkontakt 50, 52 auf, der in einer Ausbuchtung aufgenommen ist, jedoch seitlich in den Aufnahmeschacht hineinragt. Diese Federkontakte 50, 52 sind mit der Masse des Computers oder Computer-Moduls verbunden. Bei vollständig eingeschobener Vorrichtung liegen sie kontaktierend an den Seitenwandungen 40, 42 an. In üblicher Weise sind die Bestandteile des Aufnahmeschachtes 30 nach außen von einer Gehäusewandung 56 des Computers oder Computer-Moduls abgedeckt. Ferner ist in üblicher Weise neben dem Aufnahmeschacht eine Auswerfertaste 58 vorgesehen, die nach außen ragt.

Wie aus Figur 2 ersichtlich, ist die Länge der Vorrichtung im Hinblick auf die Tiefe des Aufnahmeschachtes 30 so gewählt, daß ihr Gehäuse nicht oder nur unwesentlich aus dem Aufnahmeschacht herausragt, wenn es vollständig in diesen eingeschoben ist. Dies ist sehr erwünscht, da beispielsweise bei einem tragbaren Computer nach außen herausragende Teile störend sein können. Die Chipkarte 18 hingegen ragt über einen beträchtlichen Teil ihrer Länge aus dem Aufnahmeschacht heraus. Dies ist aber kein Mangel, da die Chipkarte nur bei Gebrauch eingschoben wird. Ihre Handhabung wird sogar erleichtert, wenn ein relativ großer Flächenbereich zum Anfassen zur Verfügung steht.

Der Aufnahmeschacht 30 hat in dem Bereich, welcher dem Randbereich A der Vorrichtung entspricht, eine Breite, die mit der Breite der Chipkarte 18 übereinstimmt. Die Weite des Aufnahmeschachtes 30 an seinem äußeren Ende ist etwas größer und gestattet so die Aufnahme der Seitenwandungen 40, 42, die über die Breite der Chipkarte 18 hinausragen. Insbesondere kann die Wandstärke der Seitenwandungen 40, 42 etwa 0,2 bis 0,25 mm betragen. Diese Wandstärke ist auch für die Hauptflächen des Gehäuses ausreichend, so daß eine einteilige oder zweiteilige Gehäusekonstruktion möglich ist, wie in den Figuren 3a und 3b gezeigt.

Die Randstreifen 44, 46 im Zwischenbereich C werden jedoch als getrennte Teile bereitgestellt, da sie aus einem dünneren Material gefertigt werden müssen, dessen Wandstärke nur etwa 0,1 bis 0,15 mm beträgt. Sie können aber ebenso wie die übrigen Bestandteile des Gehäuses aus Metallblech gefertigt werden. Alle Gehäuseverbindungen sind an den Hauptflächen des Gehäuses ausgebildet. An den Schmalseiten befinden sich keine Verbindungsstellen, die zu einer lokal vergrößerten Wandstärke führen könnten.

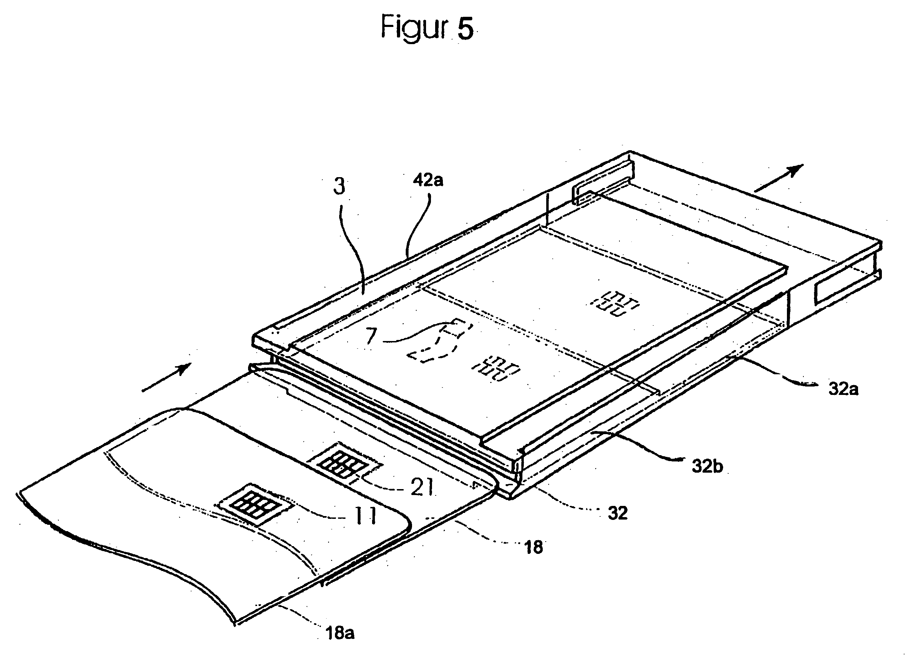

Die beschriebene Ausführungsform der Schnittstellen-Vorrichtung ist für nur eine Chipkarte bestimmt. Nach dem gleichen Prinzip läßt sich aber eine Schnittstellen-Vorrichtung verwirklichen, die für zwei oder mehr Chipkarten bestimmt ist. Eine solche Ausführungsform ist in Figur 5 gezeigt.

Wie aus Figur 5 ersichtlich, hat der Aufnahmekanal 32 eine Höhe, die für zwei unmittelbar übereinanderliegende Chipkarten 18, 18a ausgelegt ist. Der Aufnahmekanal 32 umfaßt einen ersten Teil 32a von größerer Länge als sein zweiter Teil 32b, so daß die Chipkarten 18, 18a verschieden weit eingeschoben werden. Insbesondere wird die Chipkarte 18a nur so weit eingeschoben, daß sie das Kontaktfeld 21 der Chipkarte 18 nicht abdeckt. Eine Blattfeder 7, die unter der oberen Hauptfläche befestigt ist, drückt eine einzeln eingeschobene Chipkarte nach unten in den Teil 32a des Aufnahmekanals, um eine eindeutige Zuordnung zu gewährleisten.

## Patentansprüche

1. Schnittstellen-Vorrichtung für Chipkarten im genormten Kreditkarten-Format, mit einem flachen Gehäuse, das zum Einschieben in einen für genormte PCMCIA-Karten vorgesehenen Aufnahmeschacht (30) bestimmt ist und einen Stecksockel (12) an seinem vorderen Ende sowie von seinem hinteren Ende ausgehend einen Aufnahmekanal (32) für wenigstens eine Chipkarte (18) aufweist,
wobei die Breite des Gehäuses in seinem an den Stecksockel (12) angrenzenden Randbereich (A) mit der des genormten Chipkarten-Formats übereinstimmt;
der Aufnahmekanal (32) vor dem an den Stecksockel (12) angrenzenden Randbereich (A) des Gehäuses endet;
das Gehäuse zumindest an seinem hinteren Ende (B) seitlich geschlossen ist;
der in den Aufnahmeschacht (30) eingeschobene Teil des Gehäuses auch wenigstens den größten Teil des seitlich geschlossenen hinteren Endes umfaßt;
die Weite des Aufnahmekanals (32) am hinteren Ende des Gehäuses etwa mit der Breite des Chipkarten-Formats übereinstimmt;
**dadurch gekennzeichnet, daß**:
das Gehäuse an seinem hinteren, seitlich geschlossenen Ende (B) eine Breite aufweist, die bis zu 0,5 mm größer als die des Chipkarten-Formats ist.

2. Vorrichtung nach Anspruch 1, **dadurch gekennzeichnet, daß** ein Zwischenbereich (C) des Gehäuses, der zwischen dem seitlich geschlossenen hinteren Ende (B) und dem an den Stecksockel (12) angrenzenden Randbereich (A) gelegen ist, gleichfalls seitlich geschlossen ist.

3. Vorrichtung nach Anspruch 2, **dadurch gekennzeichnet, daß** die Seitenwandungen des Gehäuses an dessen Zwischenbereich (C) eine geringere Wandstärke als an seinem hinteren Ende (B) aufweisen.

4. Vorrichtung nach Anspruch 3, **dadurch gekennzeichnet, daß** die Seitenwandungen des Gehäuses über den Zwischenabschnitt hinaus bis in den an den Stecksockel angrenzenden Randbereich (A) verlängert und dort in die Schmalseite des Gehäuses eingelassen sind.

5. Vorrichtung nach einem der vorstehenden Ansprüche, **dadurch gekennzeichnet, daß** der Aufnahmekanal (32) an seinem vorderen, an den Randbereich (A) des Gehäuses angrenzenden Ende gerundete Führungsflächen (32a, 32b) aufweist, die der Verrundung an den Ecken des Kreditkarten-Formats entsprechen.

6. Vorrichtung nach einem der vorstehenden Ansprüche, **dadurch gekennzeichnet, daß** eine Hauptfläche (11) des Gehäuses im Bereich seines hinteren Endes (B) aus einem durchgehenden Metallblechteil einteilig mit wenigstens einer abgewinkelten Seitenwand (42) und einem von dieser abgewinkelten Wandungsstreifen (10b) ausgebildet ist, der sich auf der gegenüberliegenden Hauptfläche (10) des Gehäuses erstreckt.

7. Vorrichtung nach einem der vorstehenden Ansprüche, **dadurch gekennzeichnet, daß** die Hauptflächen des Gehäuses in seinem Zwischenbereich (C) durch Metallblechplatten gebildet sind, deren seitliche Längsränder (10a, 10b) von. den Flügeln eines im Querschnitt U-förmigen, dünnwandigen Randstreifens (44, 46) übergriffen werden, die auf den Hauptflächen (10, 11) des Gehäuses mit den Längsrändern (10a, 10b) der Metallblechplatten verbunden sind.

8. Vorrichtung nach einem der vorstehenden Ansprüche, **dadurch gekennzeichnet, daß** die Breite des Gehäuses an seinem hinteren Ende (B) die des genormten Kreditkarten-Formats um 0,4 bis 0,5 mm überschreitet.

9. Vorrichtung nach einem der vorstehenden. Ansprüche, **dadurch gekennzeichnet, daß** die Breite des Gehäuses in seinem Zwischenbereich (C) die des genormten Kreditkarten-Formats um 0,2 bis 0,3 mm überschreitet.

10. Vorrichtung nach einem der vorstehenden Ansprüche, **dadurch gekennzeichnet, daß** der Aufnahmekanal (32) in einem Abstand (S) von mindestens 20 mm, vorzugsweise 25 mm, vor dem vorderen Ende des Gehäuses endet.

11. Vorrichtung nach einem der vorstehenden Ansprüche, **dadurch gekennzeichnet, daß** der Aufnahmekanal (32) für mehrere unmittelbar übereinanderliegend eingeschobene Chipkarten (18, 18a) dimensioniert ist.

12. Vorrichtung nach Anspruch 11, **dadurch gekennzeichnet, daß** zwei der Chipkarten (18, 18a) in solchem Maße verschieden tief in den Aufnahmekanal (32) einschiebbar sind, daß keine Chipkarte die Kontaktflächen (19, 19a) der anderen Chipkarte abdeckt.

13. Vorrichtung nach einem der vorstehenden Ansprüche, **dadurch gekennzeichnet, daß** die das Gehäuse seitlich schließenden Seitenwände (40, 42) eine Führung des Gehäuses im Aufnahmeschacht (30) bewirken.

14. Vorrichtung nach Anspruch 13, **dadurch gekennzeichnet, daß** in dem Aufnahmekanal (32) eine Feder (7) derart angeordnet ist, daß sie eine. einzeln eingeschobene Chipkarte gegen eine Hauptfläche des Gehäuses beaufschlagt.

15. Vorrichtung nach einem der vorstehenden Ansprüche, **dadurch gekennzeichnet, daß** die das Gehäuse seitlich schließenden Seitenwände (40, 42) von federnden Massekontakten (50, 52) des Aufnahmeschachtes (30) kontaktierbar sind.

## Claims

1. An interface device for chip cards in standardized credit card format, comprising a flat housing which is intended for insertion into an accommodation slot (30) provided for standardized PCMCIA cards and has a plug-in socket (12) at its front end and, extending from its rear end, an accommodation channel (32) for at least one chip card (18),
the breadth of the housing in its edge region (A) adjoining the plug-in socket (12) being the same as that of the standardized chip card format;
the accommodation channel (32) terminating before the edge region (A) of the housing adjoining the plug-in socket (12);
the housing being closed on the sides at least at its rear end (B);
the portion of the housing which is inserted in the accommodation slot (30) also comprising at least the major portion of the rear end closed on the sides;
the width of the accommodation channel (32) at the rear end of the housing being about the same as the breadth of the chip card format;
**characterized in that**:
the housing has a breadth at its rear end (B) closed on the sides which exceeds that of the chip card format by up to 0.5 mm.

2. The device according to claim 1, **characterized in that** an intermediate region (C) of the housing, located between the rear end (B) closed on the sides and the edge region (A) adjoining the plug-in socket (12), is likewise closed on the sides.

3. The device according to claim 2, **characterized in that** the side walls of the housing have a thinner wall thickness in its intermediate region (C) than at its rear end (B).

4. The device according to claim 3, **characterized in that** the side walls of the housing are extended beyond the intermediate section as far as into the edge region (A) adjoining the plug-in socket and are fitted into the narrow side of the housing **in that** region.

5. The device according to any of the preceding claims, **characterized in that** the accommodation channel (32) has rounded guide surfaces (32a, 32b) at its front end adjoining the edge region (A) of the housing, which correspond to the rounded corners of the credit card format.

6. The device according to any of the preceding claims, **characterized in that** a main surface (11) of the housing in the region of its rear end (B) is formed of a continuous sheet metal part integrally with at least one bent side wall (42) and a wall strip (10b) which is bent from the side wall (42) and extends on the opposite main surface (10) of the housing.

7. The device according to any of the preceding claims, **characterized in that** the main surfaces of the housing in the intermediate region (C) thereof are formed by sheet metal plates having lateral longitudinal edges (10a, 10b) over which the wings of a thin-walled edge strip (44, 46) reach which is U-shaped in cross-section, the wings being connected with the longitudinal edges (10a, 10b) of the sheet metal plates on the main surfaces (10, 11) of the housing.

8. The device according to any of the preceding claims, **characterized in that** the breadth of the housing at its rear end (B) exceeds that of the standardized credit card format by 0.4 to 0.5 mm.

9. The device according to any of the preceding claims, **characterized in that** the breadth of the housing in its intermediate region (C) exceeds that of the standardized credit card format by 0.2 to 0.3 mm.

10. The device according to any of the preceding claims, **characterized in that** the accommodation channel (32) ends at a distance (S) of at least 20 mm, preferably 25 mm, before the front end of the housing.

11. The device according to any of the preceding claims, **characterized in that** the accommodation channel (32) is dimensioned for a plurality of chip cards (18, 18a) which are inserted lying directly one on top of the other.

12. The device according to claim 11, **characterized in that** two of the chip cards (18, 18a) are insertable into the accommodation channel (32) to different depths such that neither chip card covers up the contact surfaces (19, 19a) of the other chip card.

13. The device according to any of the preceding claims, **characterized in that** the side walls (40, 42) closing the housing on the sides effect a guidance of the housing in the accommodation slot (30).

14. The device according to claim 13, **characterized in that** a spring (7) is arranged in the accommodation channel (32) such that it biases a singly inserted chip card against a main surface of the housing.

15. The device according to any of the preceding claims, **characterized in that** the side walls (40, 42) closing the housing on the sides are adapted to be contacted by resilient ground contacts (50, 52) of the accommodation slot (30).

## Revendications

1. Dispositif d'interface pour cartes à puce au format normalisé des cartes de crédit, comportant un boîtier plat destiné à être inséré dans un réceptacle (30) pour cartes normalisées PCMCIA et présentant un support enfichable (12) sur son extrémité avant ainsi qu'à partir de son extrémité arrière, un canal d'insertion (32) pour au moins une carte à puce (18),
la largeur du boîtier dans la zone (A) jouxtant le support enfichable (12) coïncidant à celle du format normalisé de la carte à puce,
le canal d'insertion (32) se terminant avant la zone (A) du boîtier jouxtant le support enfichable (12),
le boîtier étant fermé latéralement au moins sur son extrémité (B) arrière,
la partie du boîtier insérée dans le réceptacle (30) comprenant aussi au moins la plus grande partie de l'extrémité arrière fermée latéralement,
la largeur du canal d'insertion (32) à l'extrémité arrière du boîtier correspondant à peu près à la largeur du format de la carte à puce,
**caractérisé en ce que**
le boîtier à son extrémité (B) arrière, fermée latéralement, présente une largeur plus grande d'au plus 0,5 mm que celle du format de la carte à puce.

2. Dispositif selon la revendication 1, **caractérisé en ce qu'**une zone intermédiaire (C) du boîtier, située entre l'extrémité (B) arrière fermée latéralement et la zone (A) jouxtant le support enfichable (12), est également fermée latéralement.

3. Dispositif selon la revendication 2, **caractérisé en ce que** les parois latérales du boîtier ont une épaisseur plus faible dans sa zone intermédiaire (C) qu'à son extrémité arrière (B).

4. Dispositif selon la revendication 3, **caractérisé en ce que** les parois latérales du boîtier se prolongent au-delà de la section intermédiaire jusque dans la zone (A) jouxtant le support enfichable et sont encastrées à cet endroit dans la partie étroite du boîtier.

5. Dispositif selon l'une des revendications précédentes, **caractérisé en ce que** le canal d'insertion (32) possède à son extrémité avant, jouxtant la zone (A) du boîtier, des surfaces de guidage (32a, 32b) arrondies correspondant à l'arrondi des coins du format de carte de crédit.

6. Dispositif selon l'une des revendications précédentes, **caractérisé en ce qu'**une surface principale (11) du boîtier située dans la zone de son extrémité arrière (B) est réalisée d'un seul tenant en une pièce de tôle métallique continue avec au moins une paroi latérale (42) repliée et une bande de paroi (10b) repliée à partir de celle-ci, qui s'étend sur la surface principale opposée (10) du boîtier.

7. Dispositif selon l'une des revendications précédentes, **caractérisé en ce que** les surfaces principales du boîtier, dans la zone intermédiaire (C ) de celui-ci, sont formées par des plaques de tôle métallique dont les deux bords longitudinaux latéraux (10a, 10b) sont saisis entre les ailes d'une bande de bordure (44, 46) de faible épaisseur ayant une section en forme de U, les ailes étant reliées sur surfaces principales (10, 11) du boîtier aux bords longitudinaux (10a, 10b) des plaques de tôle métallique.

8. Dispositif selon l'une des revendications précédentes, **caractérisé en ce que** la largeur du boîtier dans sa partie arrière (B) dépasse celle du format normalisé de carte de crédit de 0,4 à 0,5 mm.

9. Dispositif selon l'une des revendications précédentes, **caractérisé en ce que** la largeur du boîtier dans sa zone intermédiaire (C) dépasse celle du format normalisé de carte de crédit de 0,2 à 0,3 mm.

10. Dispositif selon l'une des revendications précédentes, **caractérisé en ce que** le canal d'insertion (32) se termine à une distance (S) d'au moins 20 mm, de préférence 25 mm, avant l'extrémité avant du boîtier.

11. Dispositif selon l'une des revendications précédentes, **caractérisé en ce que** le canal d'insertion (32) est dimensionné pour recevoir plusieurs cartes à puce (18, 18a) insérées directement superposées les unes aux autres.

12. Dispositif selon la revendication 11, **caractérisé en ce que** deux des cartes à puce (18, 18a) peuvent être insérées à des profondeurs différentes dans le canal d'insertion (32) de façon à ce qu'aucune carte ne puisse cacher les surfaces de contact (19, 19a) de l'autre carte à puce.

13. Dispositif selon l'une des revendications précédentes, **caractérisé en ce que** les parois latérales (40, 42) fermant le boîtier latéralement, assurent un guidage du boîtier dans le réceptacle (30).

14. Dispositif selon la revendication 13, **caractérisé en ce qu'**un ressort (7) est disposé dans le canal d'insertion (32) de telle façon qu'elle plaque une carte à puce insérée individuellement contre une surfaces principale du boîtier.

15. Dispositif selon l'une des revendications précédentes, **caractérisé en ce que** les parois latérales (40, 42) fermant le boîtier latéralement, peuvent être mises en contact par des contacts élastiques de masse (50, 52) du réceptacle (30).
